(19) Europäisches Patentamt
European Patent Office
Office européen des brevets

(11) Numéro de publication: **0 365 371 B1**

(12) **FASCICULE DE BREVET EUROPEEN**

(45) Date de publication de fascicule du brevet: **19.01.94**   (51) Int. Cl.5: **H04B 10/08**

(21) Numéro de dépôt: **89402338.1**

(22) Date de dépôt: **24.08.89**

(54) **Système de surveillance de liaisons à fibre optique.**

(30) Priorité: **03.10.88 FR 8812900**

(43) Date de publication de la demande:
**25.04.90 Bulletin 90/17**

(45) Mention de la délivrance du brevet:
**19.01.94 Bulletin 94/03**

(84) Etats contractants désignés:
**DE GB IT NL**

(56) Documents cités:

**JOURNAL OF OPTICAL COMMUNICATIONS, vol. 6, no 1, 3/1985, pages 2-7, Mainz, DE;T. KIMURA et al.: "Distance Resolution characterization of fiber reflectometryusing sampling phase shifting digital wave memory"**

**PATENT ABSTRACTS OF JAPAN, vol. 9, no 277 (E-355)[2000], 6/11/1985;& JP-A-60 121 829 (NIPPON DENSHIN DENWA KOSHA) 29/6/1985**

(73) Titulaire: **SAT (Société Anonyme de Télécommunications)**
**6, avenue d'Iéna**
**F-75116 Paris(FR)**

(72) Inventeur: **Demantke, Jean-Marie Georges**
**41, rue Cantagrel**
**F-75631 Paris Cedex 13(FR)**

(74) Mandataire: **Cabinet Martinet & Lapoux**
**BP 405**
**F-78055 Saint Ouentin en Yvelines Cédex (FR)**

**Description**

La présente invention se rapporte à la surveillance de liaisons à fibre optique en vue d'y déceler et localiser un affaiblissement anormal, même relativement faible.

En particulier, un tel affaiblissement anormal peut être dû à une tentative d'une personne malintentionnée, dite intrus, pour détecter un signal utile de données convoyé dans une fibre optique de transmission. Des essais en laboratoire ont montré qu'une telle détection pourrait être réalisée en prélevant une faible quantité de la puissance transmise dans le coeur de la fibre en un point de la fibre où est exercée une simple courbure de la fibre ayant un rayon de quelques dizaines de centimètre. La puissance prélevée est celle rayonnée par la portion courbée de la fibre à travers son revêtement, par exemple en époxy-acrylate, qui peut être retiré, de préférence par attaque chimique, sur quelques centimètres lorsque celui-ci est opaque à la longueur d'onde de transmission du signal de données. La puissance prélevée est recueillie par exemple au moyen d'une fibre de plus grand diamètre dont une portion est fendue jusqu'au coeur et accolée à la portion courbée de la fibre de transmission ou dont une extrémité, de préférence lentillée, est stabilisée devant la portion courbe. Des moyens de réception adéquats sont desservis par la fibre de prélèvement et traitent le signal utile de données prélevé.

La courbure locale de la fibre de transmission de la liaison s'identifie à une variation d'ouverture numérique locale et par suite à une fuite de modes de transmission et à un affaiblissement de la puissance du signal utile. Un affaiblissement local dû au prélèvement inférieur à 0,01 dB, voire de l'ordre de 0,005 à 0,002 dB, permet de traiter convenablement le signal utile récupéré et ainsi de connaître la signification des données supportées par le signal.

Pour surveiller une liaison à fibre optique, le signal utile pourrait être directement surveillé en prélevant une partie de la puissance de celui-ci au niveau de l'extrémité de sortie et de réception de la liaison optique, afin d'y déceler une variation anormale de la puissance reçue. Cependant, cette surveillance prend en compte toutes les variations auxquelles est sujette la liaison optique, et notamment les variations de l'environnement climatiques, température et humidité, et les sollicitations mécaniques sur la fibre, telles que traction, compression et flexion, ainsi que le vieillissement éventuel des composants de la liaison, tels que connecteurs et diode d'émission. En pratique, cette surveillance assure une détection de variation de puissance de 0,2 dB au plus, ce qui constitue une protection insuffisante face à une intrusion. En outre, cette surveillance ne permet pas de localiser l'endroit dans la liaison où est provoquée la variation de puissance.

Une seconde possibilité peut consister à duplexer le signal utile de données avec un signal de surveillance déterminé indépendant du signal utile. Le multiplexage de ces signaux peut être un multiplexage temporel ou fréquentiel consistant à sommer électriquement les deux signaux dans l'extrémité d'émission de la liaison et à les séparer électriquement dans l'extrémité de réception de la liaison. Le multiplexage des deux signaux peut être également un multiplexage en longueur d'onde consistant à sommer optiquement les deux signaux émis avec des longueurs d'onde différentes dans l'extrémité d'émission de la liaison et à séparer optiquement les deux signaux dans l'extrémité de réception de la liaison.

Ces divers procédés de multiplexage de signaux se heurtent également à des inconvénients analogues à ceux évoqués par la méthode précédente de prélèvement de puissance de signal utile. En outre, la mise en oeuvre de tous ces procédés impliquent d'installer des moyens de détection et de surveillance toujours à l'extrémité de réception de la liaison optique.

La présente invention met en oeuvre un autre procédé de surveillance remédiant aux inconvénients précédents et permettant de localiser une atténuation locale anormale dans une liaison optique.

L'invention fait appel à la réflectométrie dans le domaine temporel qui est, par ailleurs, déjà utilisée en usine pour détecter des défauts dans des fibres ou liaisons optiques après leur fabrication.

On rappelle que la réflectométrie temporelle consiste à envoyer par une extrémité d'une fibre optique des impulsions lumineuses de mesure calibrées en amplitude et largeur et à détecter par la même extrémité un signal de rétrodiffusion. Les durées écoulées entre l'instant d'émission de chaque impulsion de mesure jusqu'à la détection de réflexions sont proportionnelles aux distances entre ladite extrémité de la fibre et les points de la fibre ayant donné naissance aux réflexions. Les réflexions sont de deux natures : les rétroréflexions dues à des défauts ponctuels dans la fibre ou, plus généralement, à des discontinuités dans une liaison optique, telles que connecteurs, et les rétrodiffusions dues aux pertes dans la fibre.

La réflectométrie apporte ainsi une vision de toute la liaison optique et permet de localiser rapidement toute variation d'atténuation intervenue dans la liaison. Toutefois, les réflectomètres actuels ont une résolution verticale qui est limitée à 0,01 dB.

2

EP 0 365 371 B1

L'article "Distance Resolution Characterization of Fiber Reflectometry Using Sampling Phase Shifting Digital Wave Memory" de T. Kimura, K. Noda et H. Shimizu, paru dans "Journal of Optical Communications" vol. 6, No. 1, 3/1985, pages 2 à 7, traite de la résolution en distance d'un réflectomètre temporel, défini comme la distance minimale de séparation entre deux anomalies localisées qui produisent des réflexions perceptibles sur l'écran d'un réflectomètre temporel. La précision de mesure de la localisation d'une anomalie dépend principalement de la fréquence d'échantillonnage tandis que la résolution en distance dépend à la fois de la fréquence d'échantillonnage et de la largeur de l'impulsion lumineuse de mesure.

La présente invention vise donc à fournir un système de surveillance d'une liaison de transmission comprenant au moins une fibre optique pour y détecter des sauts d'atténuation anormaux inférieurs à 0,01 dB, et en particulier des tentatives de prélèvement de puissance de signal utile de l'ordre de 0,005 à 0,002 dB ou moins. En particulier, pour des liaisons à fibre unimodale, l'invention permet de détecter des variations d'atténuation de 0,00002 dB pour une résolution de réflectomètre égale au plus à 0,002 dB.

A cette fin, un système de surveillance d'au moins une fibre optique, ladite fibre ayant une extrémité d'entrée recevant un signal utile de données à une longueur d'onde de transmission émis par un moyen électro-optique d'émission et une extrémité de sortie transmettant ledit signal de données vers un moyen électro-optique de réception, est caractérisé en ce qu'il comprend un réflectomètre optique pour transmettre périodiquement des impulsions de mesure à une longueur d'onde de mesure différente de la longueur d'onde de transmission dans la fibre optique, un duplexeur de longueurs d'onde ayant un premier accès relié à l'un des moyens électro-optiques d'émission et de réception, un second accès relié au réflectomètre et un accès commun relié à l'extrémité de la fibre optique associée au moyen électro-optique relié au premier accès, et des moyens de calcul connectés au réflectomètre pour localiser un saut d'atténuation anormal dans la fibre supérieur à un seuil prédéterminé par traitement de signaux de rétrodiffusion détectés par le réflectomètre et transmis par la fibre optique de l'accès commun vers le second accès du duplexeur en réponse aux impulsions de mesure, ledit seuil prédéterminé étant inférieur à la résolution verticale du réflectomètre.

Selon l'invention, la résolution du système de surveillance n'est plus liée, comme celle du réflectomètre, à l'échelle de lecture des réflexions discrètes observées sur l'écran du réflectomètre. La résolution ne présume en rien de la qualité du signal de rétrodiffusion analysé dont elle est indépendante. Par contre, le signal de rétrodiffusion est dégradé par du bruit dont l'influence dans la mesure est réduite par un traitement mathématique de fonctions de rétrodiffusion, de préférence moyennées sur quelques secondes, dans les moyens de calcul. Les rétroréflexions de Fresnel dues à des particularités localisables initialement dans la liaison optique à surveiller, tels que connecteurs et épissures, peuvent être écartées aisément par traitement mathématique.

Le traitement mathématique consiste essentiellement à calculer séquentiellement
- la différence entre deux fonctions de rétrodiffusion successives fournies par le réflectomètre,
- l'intégrale de la différence pour la longueur de la fibre optique, et
- l'abscisse d'un point de ladite intégrale où une rupture de pente correspond à un saut d'atténuation pouvant être supérieur audit seuil prédéterminé.

Plus précisément, la rupture de pente de l'intégrale traduisant un saut d'atténuation détectable par la comparaison entre une fonction de rétrodiffusion normale de référence et une fonction de rétrodiffusion anormale est repérée par un traitement mathématique de l'intégrale consistant en :
- un changement d'ordonnée correspondant à un pivotement d'une droite passant par des points, ayant comme abscisses, les extrémités de ladite fibre, avec un angle correspondant à la pente de ladite droite, pour obtenir une intégrale pivotée,
- des dichotomies successives de l'intégrale pivotée sur la longueur de la fibre, afin de calculer et comparer les écarts-types de l'intégrale pivotée dans les deux intervalles d'un intervalle précédent dichotomique et à nouveau effectuer une dichotomie des deux intervalles ayant le plus grand écart-type, l'abscisse du point de rupture de pente correspondant à un saut d'atténuation étant déterminé lorsqu'un intervalle ne comprend plus que deux à trois points de ladite intégrale pivotée, et
- un calcul des pentes de deux droites passant par ledit point de rupture de pente et les points ayant comme abscisses les extrémités de la fibre, par la méthode des moindres carrés appliquée à l'intégrale pivotée, afin de déduire de la différence des pentes des deux droites, l'atténuation audit point de rupture.

Le système de surveillance selon l'invention présente également l'avantage de ne mettre en oeuvre qu'un seul ensemble d'appareils localisé à l'une des extrémités de la liaison, lorsque la longueur de celle-ci n'excède pas une limite, de l'ordre de 150 km, au delà de laquelle la dynamique du réflectomètre ne permet plus de détecter convenablement un signal de rétrodiffusion.

3

Comme on le verra dans la suite, les mêmes réflectomètre et moyens de calcul peuvent être utilisés pour surveiller les fibres optiques, ou des liaisons élémentaires à fibre optique, suivant le même chemin, telles que celles incluses en parallèle dans un câble ou plusieurs câbles parallèles voisins, en couplant les extrémités des fibres deux à deux par des duplexeurs de longueur d'onde à trois accès à travers lesquels s'acheminent les impulsions de mesure et signaux de rétrodiffusion. La transmission des signaux utiles de données dans les fibres n'est pas arrêtée pour les besoins de la surveillance de la liaison, dans la mesure où les longueurs d'onde des signaux utiles sont différentes de celle des impulsions de mesure délivrées par le réflectomètre. La longueur d'onde des impulsions de mesure est de préférence celle pour laquelle les fibres optiques de la liaison atténuent le moins, et par suite correspond sensiblement à une atténuation linéique minimale de la liaison optique, afin d'obtenir une grande sensibilité de détection grâce à un rapport signal à bruit élevé.

D'autres avantages et caractéristiques de l'invention apparaîtront plus clairement à la lecture de la description suivante de plusieurs réalisations préférées de l'invention en référence aux dessins annexés correspondants dans lesquels :

- la Fig. 1 est un bloc-diagramme schématique d'un système de surveillance d'une liaison à une seule fibre optique, selon l'invention ;
- la Fig. 2 est un algorithme d'un calculateur inclus dans le système de surveillance, et concerne en particulier le traitement mathématique d'une fonction de rétrodiffusion transmise par un réflectomètre ;
- les Figs. 3A à 3D montrent théoriquement et une fonction de rétrodiffusion normale dite de référence et une fonction de rétrodiffusion avec saut d'atténuation à localiser, la différence de ces deux fonctions, l'intégrale de la différence et une fonction de pivotement faisant suite à un changement d'ordonnée de l'intégrale équivalant à un pivotement, respectivement ;
- les Figs. 4 et 5 sont des diagrammes obtenus expérimentalement et correspondant au diagramme théorique de la Fig. 3D, pour une fibre monomode et une fibre multimode, respectivement ;
- la Fig. 6 est un bloc-diagramme schématique d'un système pour surveiller un câble à fibre optique ayant une longueur de quelques kilomètres ;
- la Fig. 7 est un bloc-diagramme schématique d'un système pour surveiller un réseau optique en étoile du type à communication multipoint ; et
- la Fig. 8 est un bloc-diagramme schématique d'un système pour surveiller un câble à fibre optique ayant une longueur de plusieurs dizaines de kilomètres.

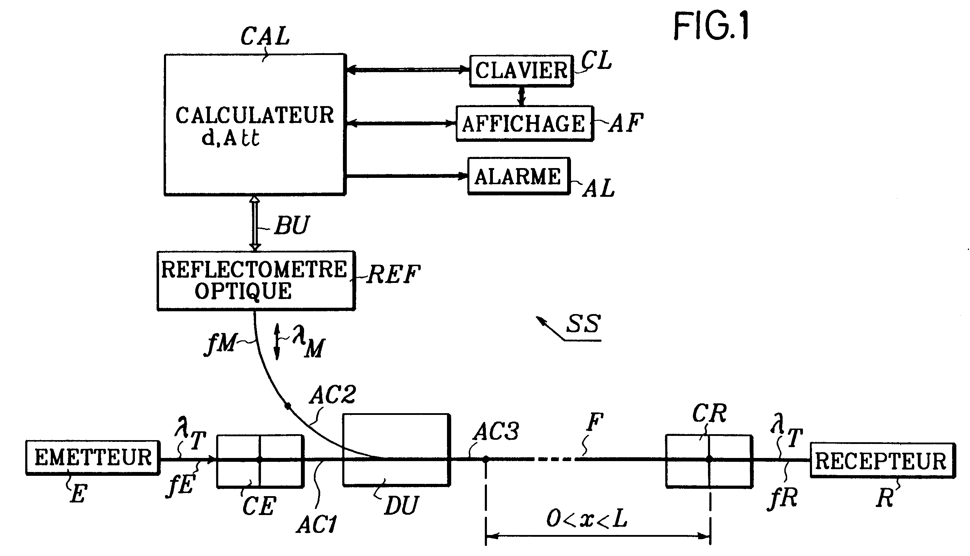

Selon la réalisation simple illustrée à la Fig. 1, un système de surveillance SS est destiné à ne surveiller qu'une seule fibre optique F dans une liaison de transmission optique.

La fibre optique F transmet un signal utile de données ayant une longueur d'onde de transmission prédéterminée $\lambda_T$. Le signal utile est émis par un émetteur électro-optique classique E, tel qu'une diode électroluminescente LED ou une diode laser DL, et est reçu par un récepteur photoélectrique classique R, tel qu'une photodiode PIN ou à avalanche. L'émetteur E est couplé à une extrémité d'entrée de la fibre F à travers une fibre optique courte intermédiaire fE et un connecteur de fibre optique CE. De même, le récepteur R est couplé à une extrémité de sortie de la fibre F à travers une fibre optique courte intermédiaire fR et un connecteur de fibre optique CR.

Lorsqu'on désire surveiller la liaison à fibre optique F avec le système de surveillance SS, un duplexeur de longueurs d'onde DU à trois accès est introduit à l'une des extrémités de la liaison. Le duplexeur introduit de faible perte de l'ordre de 0,05 dB à 0,3 dB. Selon la réalisation de la Fig. 1, le duplexeur DU est introduit du côté de l'extrémité d'émission de la liaison, entre l'émetteur E et l'extrémité d'entrée de la fibre F. Un premier accès AC1 à longueur d'onde $\lambda_T$ du duplexeur est relié à l'extrémité de sortie de la fibre intermédiaire fE à travers le connecteur CE. Un second accès AC2 à longueur d'onde de mesure $\lambda_M$ du duplexeur est relié par soudure à une fibre optique de sortie fM d'un réflectomètre REF. Un troisième accès dit commun du duplexeur DU ayant une large bande AC3 incluant les longueurs d'onde $\lambda_T$ et $\lambda_M$ est soudé à l'extrémité d'entrée de la fibre F.

Le réflectomètre REF est un réflectomètre connu inclus dans le système de surveillance SS et fonctionne avec une longueur d'onde $\lambda_M$ différente de $\lambda_T$. Le réflectomètre sert à émettre périodiquement des impulsions lumineuses ayant des amplitude et largeur prédéterminées dans la fibre F, à travers le duplexeur DU, et à détecter des signaux rétrodiffusés par la fibre F, à travers le duplexeur DU, en réponse aux impulsions de mesure.

Le système de surveillance comprend également un calculateur électronique CAL auquel sont reliés un clavier CL, un dispositif d'affichage de paramètre et de courbe AF, tel qu'un écran et/ou une imprimante, et un dispositif d'alarme visuel ou sonore AL. Le calculateur CAL est relié au réflectomètre REF à travers un bus bidirectionnal BU à travers lequel le calculateur transmet notamment des signaux de commande et de lecture d'information. Le calculateur CAL reçoit du réflectomètre REF les caractéristiques de courbe de rétrodiffusion indiquant la variation de la puissance rétrodiffusée en décibel en fonction de la variable de distance x, dans la liaison à surveiller, pour chaque impulsion de mesure envoyée dans la liaison. A titre d'exemple, le réflectomètre REF est l'un de ceux fabriqués par la société ANDO, offre une dynamique de l'ordre de 20 dB pour une résolution verticale de 0,01 dB correspondant à un codage des points d'une courbe de rétrodiffusion avec des mots à 12 bits ; le calculateur CAL est le calculateur programmable HEWLET-PACKARD 9816 de la série 200, associé à une imprimante 82 906 A.

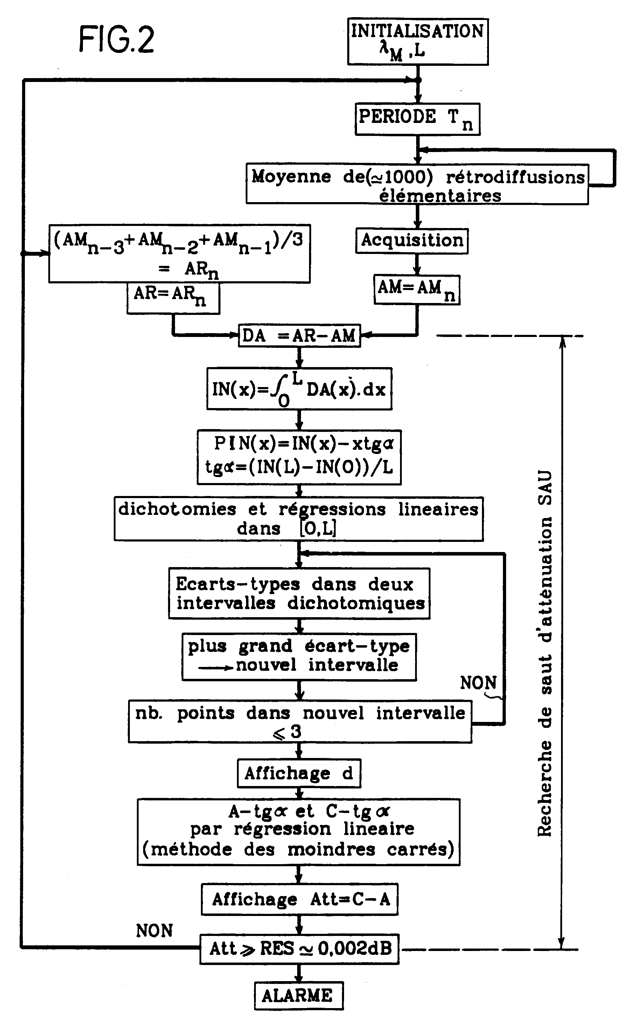

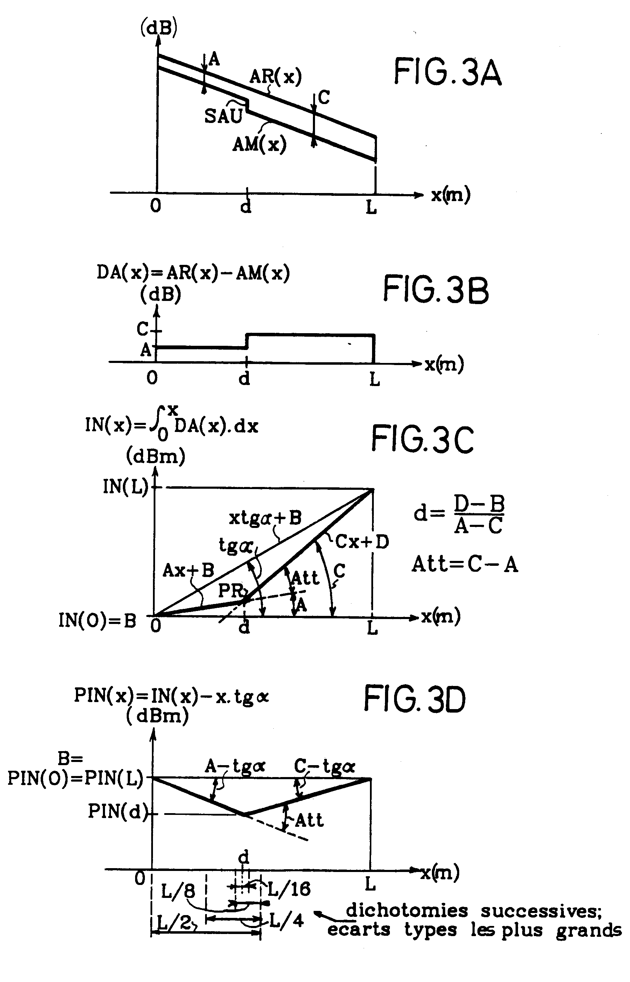

Initialement, dans le calculateur CAL est stocké un logiciel dont le programme principal est illustré sous forme d'algorithme à la Fig. 2. Le traitement mathématique mis en oeuvre par cet algorithme est commenté ci-après en référence aux graphes montrés aux Figs. 3A à 3D, afin de déterminer précisément la localisation d'un affaiblissement local dans la fibre F et la valeur de celui-ci. Cet affaiblissement local peut être dû à une contrainte soudaine exercée sur la fibre F, telle qu'une courbe locale effectuée par un intrus en vue de détecter le signal utile de données à longueur d'onde $\lambda_T$ transmis dans la fibre F.

Avant que la contrainte soit exercée, la liaison optique est en état normal de fonctionnement, et la fonction d'atténuation due à la rétrodiffusion est représentée théoriquement par une fonction linéaire décroissante AR(x) entre l'extrémité d'entrée de la fibre définie pour x = 0 et l'extrémité de sortie de la fibre définie pour x = L. Un traitement mathématique dans le calculateur permet d'éliminer les paliers de bruit de part et d'autre du signal de puissance de rétrodiffusion délivré par le réflectomètre REF, ainsi que des pics de rétrodiffusion provoqués par des rétroréflexions de Fresnel notamment au niveau de discontinuités ou défauts prévisibles dans la liaison optique, tels qu'au niveau du duplexeur DU et du connecteur CR. L'origine des abscisses à x = 0 est repérée après le pic correspondant à la soudure entre l'accès commun AC3 du duplexeur et l'extrémité d'entrée de la fibre, et la courbe de rétrodiffusion est ainsi limitée à la longueur L de la fibre F. Dans ces conditions, l'échelle graphique est augmentée et la résolution graphique est améliorée.

Lorsqu'une contrainte est exercée sur la fibre F, celle-ci se traduit par un saut brusque d'affaiblissement SAU sensiblement vertical dans la courbe d'atténuation. En théorie, la fonction d'atténuation correspondante mesurée AM(x) comprend alors un premier tronçon décroissant parallèle à la droite de référence AR jusqu'au saut SAU ayant l'abscisse d déterminant la localisation de la contrainte, et un second tronçon décroissant parallèle à la droite AR mais écarté plus notablement de celle-ci. En effet, l'atténuation locale à x = d effondre l'amplitude du signal de rétrodiffusion pour les points suivants x>d qui suivent la zone de rupture. Afin de distinguer les fonctions AM(x) et AR(x) dans la Fig.3A, on a supposé que les deux impulsions de mesure correspondant à ces deux fonctions avaient des amplitudes différentes, bien qu'en pratique, les amplitudes des impulsions de mesure à longueur d'onde $\lambda_M$ délivrées par le réflétomètre REF sont sensiblement égales. Dans ces conditions, au niveau du premier troncon de droite, pour D<x<d les droites sont écartées d'une atténuation constante A, et au niveau du second troncon après le saut SAU, pour d<x<L, les droites sont écartées d'une atténuation constante C différente de A, et est plus grande que A en valeur absolue.

Les deux fonctions AR(x) et AM(x) sont ensuite soustraites point à point pour produire la fonction de différence d'atténuation DA(x) = AR(x) - AM(x). Par exemple, l'échantillonnage des fonctions est réalisé à raison d'un point par mètre pour une longueur L de fibre comprise entre un et quelques dizaines de kilomètres. Il apparaît ainsi que la différence de deux fonctions de rétrodiffusion de même pente, mais de niveaux distincts, telles que les seconds tronçons de droite AR et AM entre x = d et x = L, est représentée par une droite horizontale. Le saut SAU à x = d est ainsi représenté par une "marche d'escalier" ayant une largeur Att = C - A dans la fonction DA(x). La marche d'escalier succède à un segment de droite DA(x) = A pour 0<x<d, et précède un segment de droite DA(x) = C pour d<x<L.

L'intégrale IN(x) de la fonction de différence DA(x) est ensuite calculée point par point :

$$IN(x) = \int_{0}^{x} DA(x).dx, \quad \text{pour } 0 \le x \le L$$

soit :

pour $0 \le x \le d$, IN = Ax + B, et
pour $d \le x \le L$, IN = Cx + D

où B et D sont des constantes d'intégration telles que B = IN(O) et D = IN(L)-C.L. Comme montré à la Fig. 3C, les segments de droite horizontale de la fonction de différence, DA(x) = A et DA(x) = C, correspondent respectivement à des segments de droite ayant des pentes A et C dans la fonction d'intégrale IN(x). Ainsi à chaque saut d'atténuation SAU, la pente du segment d'intégrale succédant au saut est proportionnelle à l'amplitude du saut et s'ajoute à celle du saut précédent. La différence des rétrodiffusions DA(x) fait apparaître un saut d'atténuation Att, tandis que l'intégrale fait apparaître une rupture de pente, en PR. L'affaiblissement local à x = d est égal à la différence des pentes Att = C-A et la position du défaut est à l'intersection des droites des segments, soit :

Ad + B  =  Cd + D, d'où d = (D-B)/(A-C).

Comparativement à la fonction AM(x), il apparaît qu'il est beaucoup plus précis de repérer une rupture de pente entre deux droites, qu'un écart vertical entre deux droites parallèles ; en d'autres termes, bien que la résolution verticale du réflectomètre REF soit au moins égale à 0,01 dB, l'invention permet d'atteindre une résolution inférieure à 0,01 dB, en pratique au plus égal à 0,002 dB, et donc de détecter des défauts dans la fibre engendrant une atténuation Att de l'ordre de 0,002 dB en fonction de la stabilité du récepteur dans le réflectomètre. L'intégration offre l'avantage de prendre en considération tous les points de la courbe de rétrodiffusion, comparativement à un repérage de saut dans cette courbe par différences successives des amplitudes entre deux points adjacents.

En pratique, les courbes de rétrodiffusion AR(x) et AM(x) sont perturbées par du bruit, si bien que celles-ci ne sont pas des droites mais plutôt des fluctuations oscillant sensiblement de part et d'autre de segments de droite. Ces fluctuations accentuent le brouillage dans la fonction de différence DA(x), si bien qu'il est nécessaire de déterminer par approximations successives le point de rupture de pente PR à x = d dans l'intégrale IN(x). La détection précise du point de rupture PR fait l'objet des étapes suivantes de l'algorithme de calcul montré à la Fig. 2.

Le point de rupture de pente PR est repéré automatiquement par un traitement mathématique qui utilise des dichotomies et des régressions linéaires successives.

Toutefois, préalablement à ce traitement, un changement d'ordonnée de la fonction d'intégration IN(x) est effectué afin que chaque point de rupture PR apparaisse comme au minimum, ou le cas échéant, comme un maximum dans une nouvelle fonction, dite intégrale pivotée PIN(x) qui est la suivante, comme montré à la Fig. 3D :

PIN(x)  =  IN(x) - x.tg$\alpha$

où tg$\alpha$  =  (IN(L) - IN(O))/L.

Ce changement d'ordonnée revient à faire pivoter la courbe IN(x) d'un angle $\alpha$ correspondant à la pente de la droite IN(x)  =  x.tg$\alpha$ + B passant par les points IN(O) et IN(L) en une droite PIN(x) = B qui est horizontale. La rupture de pente à PIN(d)  =  d(A-tg$\alpha$) + B  =  d(C-tg$\alpha$) + D forme l'intersection entre deux droites $\Delta_A$ et $\Delta_C$ passant par les points respectifs [O, PIN(O)] et [L, PIN(L)] et le point de rupture d'abscisse d et ayant des pentes respectives (A-tg$\alpha$) et (C-tg$\alpha$).

Il en résulte que la recherche du point de rupture de pente qui est un minimum ou un maximum de la fonction PIN(x) peut être effectuée par dichotomie, c'est-à-dire en partageant l'intervalle [O, L] en deux, et en comparant les écarts-types dans ces deux intervalles, ou les variances dans ces deux intervalles égales aux carrés des écarts-types. L'intervalle [O, L/2] ou [L/2, L] qui contient le point de rupture, à l'écart-type le plus grand, et la partie de la courbe PIN(x) correspondant à cet intervalle est conservée. Puis l'intervalle retenu précédent de longueur L/2 est divisé en deux autres intervalles de longueur L/4, les écarts-types dans ces deux intervalles sont calculés et comparés, et la partie de la courbe PIN(x) dans l'intervalle de longueur L/4 ayant le plus grand écart-type est conservé. Ces diverses opérations élémentaires consistant en la division par deux d'un intervalle de plus en plus petit en deux intervalles, le calcul des écarts-types dans ces deux intervalles, la comparaison des deux écarts-types calculés, et la conservation de la partie de la courbe PIN(x) ayant le plus grand écart-type sont reitérées jusqu'à ce que l'intervalle final contienne deux ou trois points voisins de la courbe PIN(x). Le milieu de cet intervalle final indique la position d de l'affaiblissement recherché apporté par la contrainte exercée sur la fibre F.

Puis dans les deux intervalles  O, d  et  d, L , les pentes A et C des deux droites de régression linéaire PIN en fonction de la variable x correspondant aux droites $\Delta_A$ et $\Delta_C$ (Fig. 3D) sont calculées par la méthode des moindres carrés :

$$A-tg\alpha = \left[\sum_i^I (x_i - \bar{x}_A)(PIN_i - \overline{PIN}_A)\right] / \left[\sum_i^I (x_i - \bar{x}_A)^2\right]$$

$$C-tg\alpha = \left[\sum_j^J (x_j - \bar{x}_C)(PIN_j - \overline{PIN}_C)\right] / \left[\sum_j^J (x_j - \bar{x}_C)^2\right]$$

où $x_i$, $PIN_i$ sont les coordonnées d'un point de la fonction PIN(x) parmi I équirépartis points dans le premier intervalle [O,d], et $\bar{x}_A$ et $_A$ les moyennes des abscisses et des ordonnées de ces I points, et où $x_j$ $PIN_j$ sont les coordonnées de la fonction PIN(x) parmi J points équirépartis dans le second intervalle [d, L], et $\bar{x}_C$ et $_C$ les moyennes des abscisses et des ordonnées de ces J points, et où la somme I+J est égale au nombre de points d'échantillon d'une courbe de rétrodiffusion AR, AM. La différence des pentes calculées Att = C-tg$\alpha$ - (A-tg$\alpha$) = C-A est égale à l'atténuation du défaut localisé à x = d.

Si la valeur Att est supérieure à un seuil prédéterminé de résolution RES du système de surveillance, le calculateur CAL déclenche le dispositif d'alarme AL afin d'avertir d'un défaut dans la liaison surveillée, et probablement, d'une tentative de détection des signaux de données au point x = d. Les valeurs d et Att sont également affichées dans le dispositif AF et mémorisées dans le calculateur CAL.

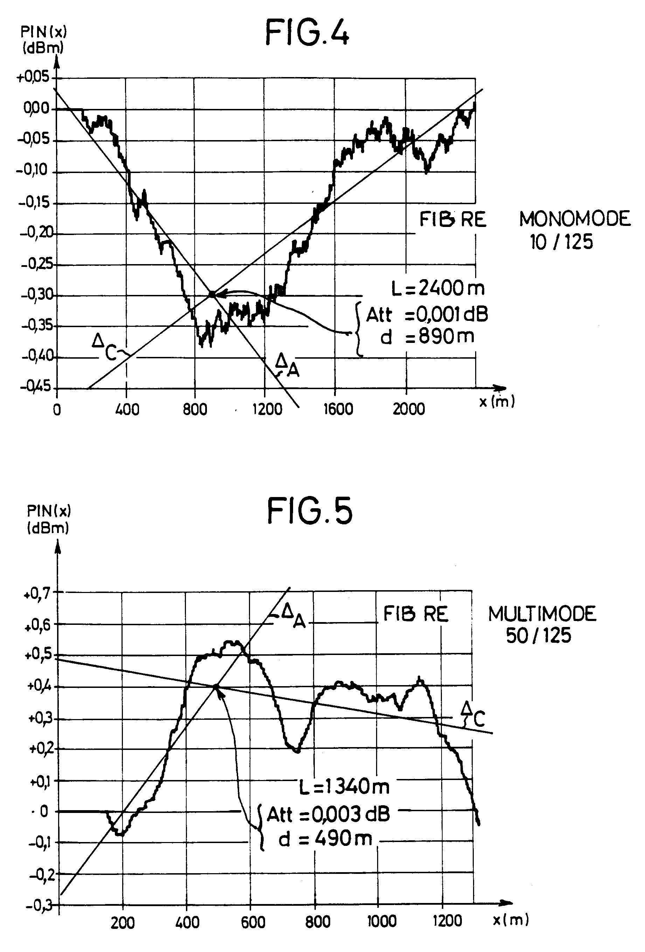

Le seuil de résolution RES est au plus égal à 0,002 dB et a été déterminé expérimentalement à la suite de nombreuses mesures avec le matériel indiqué ci-dessus relativement à des fibres unimodales et multimodales ayant des rapports de diamètres de coeur et gaine 10/125, 50/125 et 100/140 et des longueurs de 1 à 3,5 km avec des défauts différemment localisés. A titre d'exemple, les Figs. 4 et 5 montrent la fonction PIN(x) et les deux droites $\Delta_A$ et $\Delta_C$ obtenus avec un réflectomètre adapté à des fibres unimodales et calé à $\lambda_M$ = 1316 nm, respectivement pour une fibre unimodale 10/125 ayant une longueur de 2400 m et dans laquelle est localisé un défaut à d = 890 m avec une atténuation Att = 0,001 dB, et pour une fibre multimodale 50/125 ayant une longueur de 1340 m et dans laquelle est localisé un défaut à d = 490 m avec une atténuation Att = 0,003 dB.

Dans le cas d'une fibre unimodale la sensibilité de la fibre aux courbures et microcourbures varie exponentiellement avec la longueur d'onde. Il s'ensuit que dans le cas le plus fréquent d'une laison avec un signal utile à 1,3 $\mu$m qui serait surveillé par un signal de mesure à 1,55 $\mu$m, le rapport de sensibilité entre ces deux longueurs d'onde est compris entre 20 dB et 30 dB, en fonction du rayon de courbure et des paramètres intrinsèques de la fibre. Par exemple si le réflectomètre détecte 0,002 dB à 1,55 $\mu$m, cela équivaut à détecter une variation de 0,00002 dB à 0,000002 dB sur le signal utile à 1,3 $\mu$m.

Pour des fibres multimodes la sensibilité de l'atténuation aux courbures et microcourbures est indépendante de la longueur d'onde.

En pratique l'algorithme de la Fig. 2 est inclus dans un logiciel plus complet mémorisé dans le calculateur Cal, comme montré également à la Fig. 2.

Chacune des fonctions de retrodiffusion AM est acquise à la fin d'une période T de 15 secondes environ. Au cours d'une période T, le calculateur CAL moyenne plusieurs milliers de courbes élémentaires de rétrodiffusion délivrées par le réflectomètre REF en une fonction AM afin d'améliorer le rapport signal de rétrodiffusion à bruit. A la fin de chaque période $T_n$ de rang n, le programme selon l'algorithme de la Fig. 2 est effectué pour évaluer des valeurs correspondantes $d_n$ et $Att_n$, et la fonction de référence utilisée précédemment $AR_n$ est additionnée à la fonction $AM_n$ en une nouvelle fonction de référence $AR_{n+1}$ pour la période suivante $T_{n+1}$ si $Att_n$ est inférieur au seuil de résolution RES.

Selon une autre variante, des fonctions de rétrodiffusion précédentes en nombre prédéterminé, par exemple égale à trois, telles que $AM_{n-3}$, $AM_{n-2}$ et $AM_{n-1}$ ont été mémorisées et moyennées en une fonction de référence $AR_n$ au début de la période $T_n$. Dans ce cas, à la fin de la période $T_n$ après calcul de $d_n$ et $Att_n$, la fonction de rétrodiffusion acquise $AM_n$ est mémorisée pour être additionnée aux deux fonctions précédentes $AM_{n-2}$ et $AM_{n-1}$ en une nouvelle fonction de référence $AR_{n+1}$ utilisée au cours de la période $T_{n+1}$. Au lieu de comparer la moyenne des trois fonctions acquises précédentes $(AM_{n-3} + AM_{n-2} + AM_{n-1})/3$ avec la fonction $AM_n$, trois comparaisons simultanées de la fonction $AM_n$ avec lesdites trois fonctions $AM_{n-3}$, $AM_{n-2}$, $AM_{n-1}$ peuvent être effectuées et si au moins l'une des trois valeurs d'atténuation calculées respectivement en fonction des trois différences résultant de ces comparaisons est supérieure à RES, l'alarme est déclenchée.

Le logiciel comprend également une phase d'initialisation consistant en l'introduction de paramètres et en une routine pour vérifier la présence des périphériques REF, CL, AF et AL et contrôler leur bon fonctionnement. Les paramètres sont essentiellement ceux fournis par le réflectomètre, tels que la longueur d'onde de mesure $\lambda_M$ et la largeur des impulsions de mesure, ainsi que la longueur L de la liaison à surveiller avec des localisations de discontinuités ou des réflexions de Fresnel prévisibles qui sont dues par exemple à des connecteurs et/ou des coupleurs dans la liaison et qui sont à écarter a priori dans la mesure.

En particulier, la largeur des impulsions de mesure ne doit pas excéder une largeur maximale, de l'ordre de 1000 ns, au delà de laquelle la précision de la localisation d de l'affaiblissement recherché se dégrade, bien que la valeur de l'affaiblissement local Att demeure constante.

En outre, afin que le signal de rétrodiffusion ne perturbe pas le signal utile à la longueur d'onde $\lambda_T$ dans la liaison optique, la longueur d'onde $\lambda_M$ de mesure de rétrodiffusion est choisie différente de $\lambda_T$. De préférence, la longueur d'onde $\lambda_M$ est égale à la longueur d'onde pour laquelle la fibre est plus sensible aux courbures et atténue un signal le moins possible, ce qui correspond à une longueur d'onde sensiblement au centre de la bande passante de la fibre. Dans ces conducteurs, le système de surveillance offrira une sensibilité de détection accrue grâce à un rapport signal à bruit élevé. Par exemple, pour une liaison optique ayant une longueur L d'une dizaine de kilomètres ou plus propageant un signal utile de données numériques ayant un débit de 2 à 140 Mbit/s, les longueurs d'onde $\lambda_T$ et $\lambda_M$ sont égales à 1300 nm et 1550 nm pour des fibres unimodales 10/125 composant la liaison.

Lorsqu'une liaison optique est constituée par des fibres optiques parallèles inclues dans un ou plusieurs câbles, un seul système de surveillance SS selon l'invention peut surveiller l'ensemble des fibres, ou de liaisons optiques élémentaires parallèles, au moyen de duplexeurs bouclant entre elles les fibres.

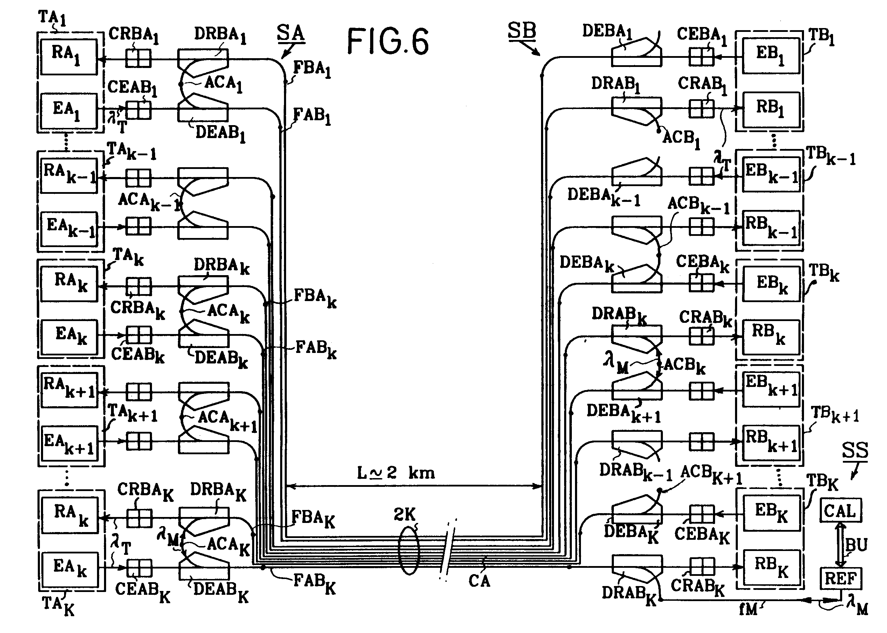

Selon la réalisation illustrée à la Fig. 6, la liaison est composée d'un câble CA composé de paires de fibres optiques $FAB_1$-$FBA_1$ à $FAB_K$-$FBA_K$ reliant des terminaux respectifs $TA_1$ à $TA_K$ et $TB_1$ à $TB_K$ dans deux stations éloignées SA et SB. Chaque paire de fibres $FAB_k$-$FBA_k$, où k est un indice entier compris entre 1 et K, est composée d'une première fibre optique $FAB_k$ reliant un émetteur électro-optique $EA_k$ du terminal $TA_k$ à un récepteur électro-optique $RB_k$ du terminal $TB_K$, et d'une seconde fibre optique $FAB_k$ reliant un émetteur électro-optique $EB_k$ du terminal $TB_k$ à un récepteur électro-optique $RA_k$ du terminal $TA_k$. D'une manière analogue à la connexion par duplexeur DU montrée à la Fig. 1, chacune des fibres $FAB_k$, $FBA_k$, a une extrémité d'entrée reliée à l'émetteur respectif $EA_k$, $EB_k$ à travers les premier et troisième accès d'un duplexeur de longueur d'onde à trois accès $DEAB_k$, $DEBA_k$, et un connecteur $CEAB_k$,$CEBA_k$ reliant une fibre optique intermédiaire, analogue à la fibre fE, et le premier accès du duplexeur. De même, une extrémité de sortie de chacune des fibres $FAB_k$, $FBA_k$ est reliée au récepteur respectif $RB_k$, $RA_k$ à travers les premier et troisième accès d'un duplexeur de longueur d'onde à trois accès $DRAB_k$, $DRBA_k$ et un connecteur $CRAB_k$, $CRBA_k$ reliant une fibre optique courte intermédiaire et le premier accès du duplexeur $DRAB_k$, $DRBA_k$.

Le réflectomètre REF et le calculateur CAL sont situés dans l'une des stations, telle que la station B selon la Fig. 6. La fibre de sortie fM du réflectomètre REF est alors soudée au second accès de l'un des duplexeurs inclus dans la station B, par exemple le duplexeur $DRAB_K$. Les seconds accès des autres duplexeurs dans chacune des stations sont reliés deux à deux afin que chaque impulsion de mesure à longueur d'onde $\lambda_M$ parcourt la totalité des 2K fibres optiques. Selon la réalisation illustrée, dans la station SA, les seconds accès des duplexeurs $DEAB_k$ et $DRBA_k$ de chaque paire de fibres $FAB_k$ et $FBA_k$ sont reliés entre eux par soudure en $ACA_k$, et dans la station SB, le second accès du duplexeur $DRAB_k$ de chaque paire de fibres $FAB_k$ et $FBA_k$ et le second accès du duplexeur $DEBA_k$ de la paire suivante de fibres $FAB_{k+1}$ et $FBA_{k+1}$ sont reliés entre eux par soudure en $ACB_k$. Ainsi une impulsion de mesure de rétrodiffusion parcourt un trajet continu qui, à partir du réflectomètre REF, est composé du duplexeur $DRAB_K$ dans la station DB, de la fibre de transmission $FAB_K$, des duplexeurs $DEAB_K$ et DRABK dans la station SA ayant des seconds accès reliés $ACA_K$, de la fibre de transmission $FBA_K$, des duplexeurs $DEBA_K$ et $DRAB_{K-1}$ dans la station SB ayant des seconds accès reliés $ACB_{K-1}$, de la fibre $FAB_{K-1}$, et ainsi de suite, jusqu'aux duplexeurs $DEAB_1$ et $DRBA_1$ dans la station A ayant des seconds accès reliés $ACA_1$, et la fibre de transmission $FBA_1$. Le signal de rétrodiffusion parcourt un trajet en sens inverse du précédent. Avec le matériel cité ci-dessus peut être surveillé un câble CA ayant une longueur de 2 km et K = 5 paires de fibres unimodales, soit l'équivalent d'une liaison optique surveillée ayant une longueur de 20 km environ.

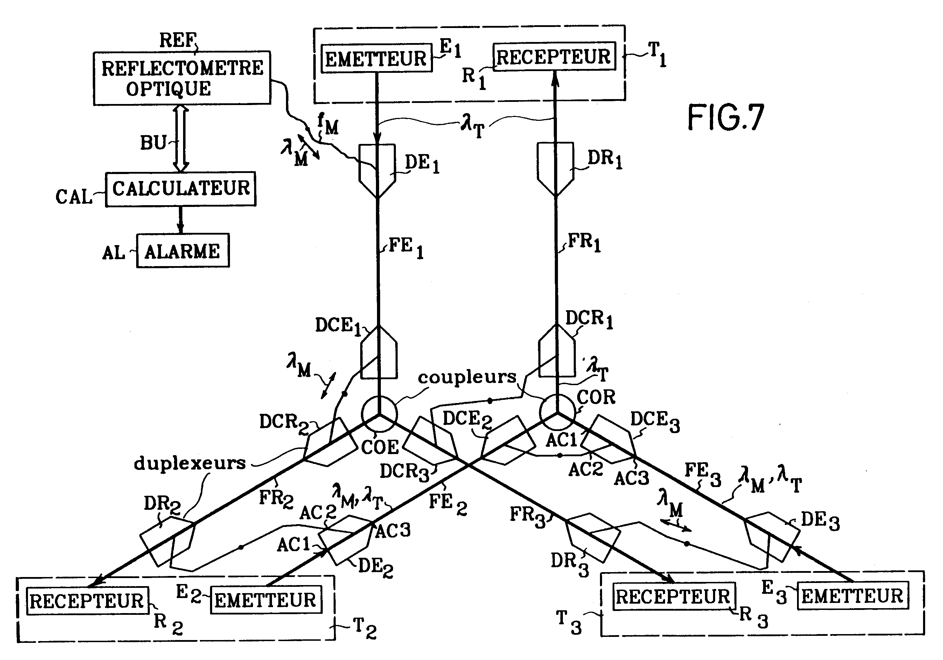

Selon une second réalisation d'une liaison optique complexe à surveiller illustrée à la Fig. 7, la liaison est constituée d'un réseau de voies optiques bidirectionnelles du type réseau à communication multipoint comprenant des coupleurs directifs en Y. Le réseau comprend trois paires de fibres optiques $FE_1$ - $FR_1$, $FE_2$-$FR_2$ et $FR_3$-$FE_3$. Chaque paire de fibres est reliée à un terminal respectif $T_1$, $T_2$, $T_3$ à émetteur électro-optique $E_1$, $E_2$, $E_3$ et récepteur électro-optique $R_1$, $R_2$, $R_3$. Le premier terminal $T_1$ est considéré comme un terminal principal dans lequel l'émetteur $E_1$ peur émettre des données vers les récepteurs $R_2$ et $R_3$ des terminaux secondaires $T_2$ et $T_3$ et le récepteur $R_1$ peut recevoir des données émises chacun à leur tour,

par des émetteurs $E_2$ et $E_3$ des terminaux $T_2$ et $T_3$. Le nombre de terminaux secondaires a été limité ici à deux pour ne pas surcharger la Fig. 7. Dans un noeud du réseau, un premier coupleur en Y, COE relie l'extrémité de sortie de la fibre $FE_1$ aux extrémités d'entrée des fibres $FR_2$ et $FR_3$, et un second coupleur en Y, COR, relie les extrémités de sortie des fibres $FE_2$ et $FE_3$ à l'extrémité d'entrée de la fibre $FR_1$.

La surveillance de ce réseau optique en Y est par exemple effectué au moyen d'un réflectomètre REF et d'un calculateur CAL qui sont localisés au niveau du terminal principal $T_1$, de trois paires de duplexeurs de longueur d'onde DE1-DR1, DE2-DR2 et DE3-DR3 localisés dans les terminaux $T_1$, $T_2$ et $T_3$, et de deux groupes de trois duplexeurs de longueurs d'onde, $DCE_1$-$DCR_2$-$DCR_3$ et $DCR_1$-$DCE_2$-$DCE_3$, localisés au niveau du noeud du réseau comprenant les coupleurs COE et COR. Dans chaque terminal $T_1$, $T_2$, $T_3$, l'extrémité d'entrée de la fibre optique $FE_1$, $FE_2$, $FE_3$ est reliée à l'émetteur $E_1$, $E_2$, $E_3$ à travers les premier et troisième accès du duplexeur respectif $DE_1$, $DE_2$, $DE_3$ et l'extrémité de sortie de la fibre $FR_1$, $FR_2$, $FR_3$ est reliée au récepteur $R_1$, $R_2$, $R_3$ à travers les troisième et premier accès du duplexeur respectif $DR_1$, $DR_2$, $DR_3$. Les trois accès du premier coupleur COE sont reliés respectivement aux premiers accès des duplexeurs $DCE_1$, $DCR_2$ et $DCR_3$ du premier groupe dont les troisièmes accès sont reliés respectivement à l'extrémité de sortie de la fibre $FE_1$ et aux extrémités d'entrée des fibres $FR_2$ et $FR_3$. Les trois accès du second coupleur COR sont reliés respectivement aux premiers accès des duplexeurs $DCR_1$, $DCE_2$ et $DCE_3$ du second groupe dont les troisièmes accès sont reliés respectivement à l'extrémité d'entrée de la fibre $FR_1$ et aux extrémités de sortie des fibres $FE_2$ et $FE_3$.

La fibre de sortie fM du réflectomètre REF est reliée au second accès de l'un des duplexeurs associés au terminal $T_1$, par exemple le duplexeur $DE_1$ relié à l'émetteur $E_1$. Dans ce cas, les trois paires de fibres du réseau en Y sont surveillées en reliant deux-à-deux les seconds accès des duplexeurs $DCE_1$ et $DCR_2$, $DR_2$ et $DE_2$, $DCE_2$ et $DCE_3$, $DE_3$ et $DR_3$, et $DCR_3$ et $DCR_1$ qui sont traversés successivement par une impulsion de mesure à longueur d'onde $\lambda_M$ émise par le réflectomètre REF.

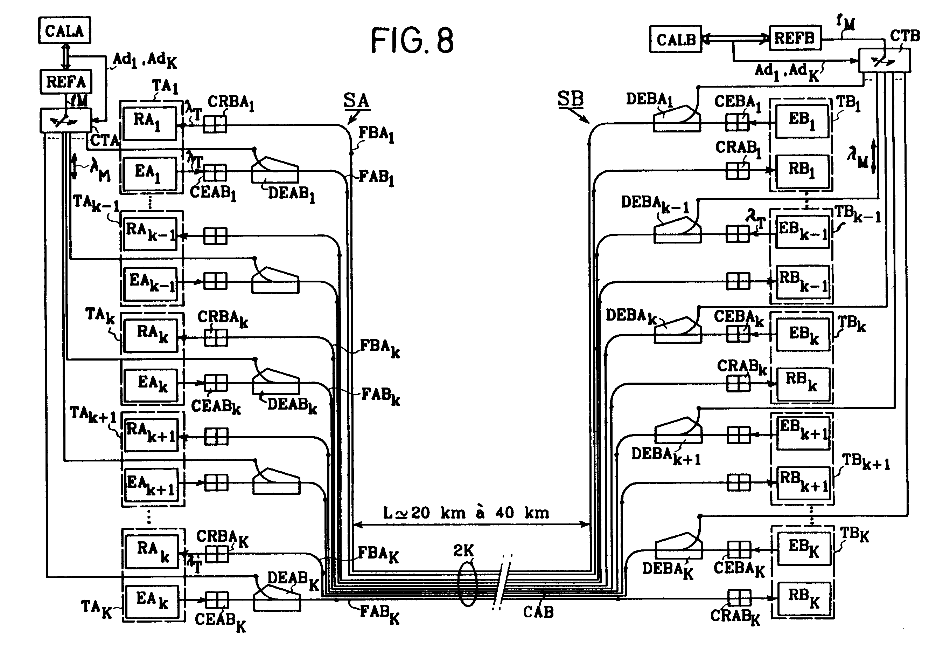

Selon une troisième réalisation de liaison optique complexe montrée à la Fig. 8, la liaison globale est constituée par un câble CAB, ou plusieurs câbles parallèles de liaisons élémentaires à fibre optique, analogues à celui de la Fig. 6, mais de grande longueur, de l'ordre de 20 à 40 km. Dans ce cas, les fibres optiques sont généralement unimodales puisque ces dernières offrent une plus faible atténuation linéaire, 0,15 à 0,40 dB/km, que celles des fibres multimodales. Si les extrémités des liaisons élémentaires du câble CAB sont couplées deux-à-deux par des duplexeurs, comme montré à la Fig. 6, la liaison globale à surveiller ainsi obtenue est trop longue pour obtenir un signal de rétrodiffusion ayant une puissance suffisante capable d'être analysée par le réflectomètre. Dans le cas de la Fig. 8, les liaisons optiques élémentaires sont scrutées séquentiellement au moyen de commutateurs optiques.

Selon la Fig. 8, un premier ensemble de réflectomètre REFA et calculateur CALA est localisé dans la première station SA et assure la surveillance séquentielle de liaisons élémentaires à fibre optique $FAB_1$ et $FAB_K$ à travers un commutateur optique CTA, et un second ensemble de réflectomètre REFB et calculateur CALB est localisé dans la seconde station SB et assure la surveillance séquentielle de liaisons élémentaires à fibre optique $FBA_1$ à $FBA_K$ à travers un commutateur optique CTB. Chacun des commutateurs CTA, CTB comprend un accès commun relié à la fibre de sortie fMA, fMB du réflectomètre respectif REFA, REFB et K accès parallèles reliés respectivement aux seconds accès des duplexeurs $DEAB_1$ et $DEAB_K$, $DEBA_1$ à $DEBA_K$ dans la station respective SA, SB. Comparativement à la Fig. 6, les duplexeurs $DRAB_1$ à $DRAB_K$ et $DRBA_1$ à $DRBA_K$ sont supprimés dans la Fig. 8. Les commutateurs CTA et CTB sont adressés cycliquement par K adresses codées $Ad_1$ à $Ad_K$ délivrées par les calculateurs CALA et CALB en synchronismes avec des groupes d'impulsions de mesure successives émises par les réflectomètres REFA et REFB. Le logiciel des calculateurs CALA et CALB est complété par rapport à la Fig. 2, afin que chaque calculateur puisse traiter en temps partagé les rétrodiffusions acquises respectivement pour chacune des liaisons à fibre optique. Par exemple, chaque période $T_n = 15$ s est divisée en K sous-périodes assujetties respectivement à la surveillance des K liaisons optiques $FAB_1$ à $FAB_K$, $FBA_1$ à $FBA_K$.

Selon d'autres variantes, les deux ensembles de réflectomètre et calculateur sont localisés dans la même station, ou bien, lorsque le câble est beaucoup plus court, un seul ensemble de réflectomètre et calculateur surveille séquentiellement toutes les liaisons optiques élémentaires à travers un seul commutateur optique.

Il est à noter que pour surveiller une liaison élémentaire non bouclée, telle que la fibre F selon la Fig. 1, ou la liaison $FAB_k$ ou $FBA_k$ selon la Fig. 8, le réflectomètre et le calculateur associés sont de préférence placés du côté de l'émetteur E ou $EA_k$ ou $EB_k$ de la liaison élémentaire. En effet, dans ce cas, la puissance rétrodiffusée vers le réflectomètre et la puissance transmise dans la liaison optique et donc disponible à l'intrus sont décroissantes simultanément et sensiblement proportionnelles tout le long de la liaison, à partir de l'émetteur.

**Revendications**

1. Système de surveillance d'au moins une fibre optique (F), ladite fibre ayant une extrémité d'entrée recevant un signal utile de données à une longueur d'onde de transmission ($\lambda_T$) émis par un moyen électro-optique d'émission (E) et une extrémité de sortie transmettant ledit signal de données vers un moyen électro-optique de réception (R), caractérisé en ce qu'il comprend un réflectomètre optique (REF) pour transmettre périodiquement des impulsions de mesure à une longueur d'onde de mesure ($\lambda_M$) différente de la longueur d'onde de transmission ($\lambda_T$) dans la fibre optique (F), un duplexeur de longueurs d'onde (DU) ayant un premier accès (AC1) relié à l'un des moyens électro-optiques d'émission et de réception (E, R), un second accès (AC2) relié au réflectomètre (REF), et un accès commun (AC3) relié à l'extrémité de la fibre optique (F) associée au moyen électro-optique relié au premier accès (AC1), et des moyens de calcul (CAL) connectés au réflectomètre (REF) pour localiser un saut (SAU) d'atténuation anormal (Att) dans la fibre supérieur à un seuil prédéterminé (RES) par traitement de signaux de rétrodiffusion détectés par le réflectomètre et transmis par la fibre optique (F) de l'accès commun (AC3) vers le second accès (AC2) du duplexeur en réponse aux impulsions de mesure, ledit seuil prédéterminé (RES) étant inférieur à la résolution verticale du réflectomètre (REF).

2. Système conforme à la revendication 1, caractérisé en ce que la longueur d'onde de mesure ($\lambda_M$) correspond sensiblement à une atténuation linéique minimale de la liaison optique (F).

3. Système selon la revendication 1 ou 2, caractérisé en ce que les moyens de calcul (CAL) comportent des moyens pour calculer séquentiellement,
   - la différence (AD) entre deux fonctions de rétrodiffusion successives (AR, AM) fournies par le réflectomètre (REF),
   - l'intégrale (IN) de la différence pour la longueur (L) de la fibre optique (F) et
   - l'abscisse (d) d'un point de ladite intégrale où une rupture de pente (PR) correspond à un saut d'atténuation (SAU) pouvant être supérieur audit seuil prédéterminé (RES).

4. Système conforme à la revendication 3, caractérisé en ce que la rupture de pente est repérée par des moyens permettant à partir de l'intégrale (IN) :
   - un changement d'ordonnée correspondant à un pivotement d'une droite ($x.tg\alpha + B$)passant par les points, ayant comme abscisses (O, L), les extrémités de ladite fibre (F), avec un angle correspondant à la pente ($tg\alpha$) de ladite droite, pour obtenir une intégrale pivotée (PIN),
   - des dichotomies successives de l'intégrale pivotée (PIN) sur la longueur (L) de la fibre, afin de calculer et comparer les écarts-types de l'intégrale pivotée dans les deux intervalles d'un intervalle précédent dichotomique et à nouveau effectuer une dichotomie de l'un des deux intervalles ayant le plus grand écart-type, l'abscisse (d) du point (PR) correspondant à un saut d'atténuation (SAU) étant déterminé lorsqu'un intervalle ne comprend plus que deux à trois points de ladite intégrale pivotée, et
   - un calcul des pentes (A-$tg\alpha$, C-$tg\alpha$) de deux droites ($\Delta_A$, $\Delta_C$)passant par ledit point de rupture de pente (PR) et les points ayant comme abscisses (O, L) les extrémités de la fibre (F), par la méthode des moindres carrés appliquée à l'intégrale pivotée (PIN), afin de déduire de la différence des pentes des deux droites, l'atténuation (Att = C-A) audit point de rupture (PR).

5. Système conforme à la revendication 3 ou 4, caractérisé en ce que chaque fonction de rétrodiffusion (AR, AM) est égale à la moyenne de fonctions élémentaires de rétrodiffusion en réponse à des impulsions de mesure émises successivement pendant une séquence de calcul ($T_n$).

6. Système conforme à la revendication 5, caractérisé en ce que ladite différence (AD) est égale à la différence de la moyenne ($AR_n$) de moyennes ($AR_{n-3}$, $AR_{n-2}$, $AR_{n-1}$) de fonctions élémentaires de rétrodiffusion pendant plusieurs séquences de calcul en nombre déterminé précédant une séquence de calcul ($T_n$) au cours de laquelle ladite différence est calculée, et la moyenne ($AR_n$) de fonctions élémentaires de rétrodiffusion acquises pendant ladite séquence de calcul ($T_n$).

7. Système conforme à l'une quelconque des revendications 1 à 6, caractérisé en ce qu'il comprend des moyens d'alarme (AL) pour signaler un saut d'atténuation anormal supérieur audit seuil prédéterminé (RES).

8. Système pour surveiller plusieurs paires de première et seconde liaisons à fibre optique ($FAB_1$ à $FAB_K$, $FBA_1$ à $FBA_K$) disposées en parallèle et ayant des premières et secondes extrémités situées dans des première et seconde stations (SA, SB), caractérisé en ce qu'il comprend des premiers et seconds duplexeurs de longueurs d'onde à trois accès ($DRBA_1$ à $DEAB_K$, $DEBA_1$ à $DRAB_K$) situés respectivement dans les première et seconde stations (SA, SB) et ayant des accès communs reliés respectivement à des premières et secondes extrémités des liaisons optiques, en ce que deux premiers duplexeurs ($DRBA_k$, $DEAB_k$) réliés aux liaisons ($FBA_k$,$FAB_k$) d'une même paire ont des seconds accès ($ACA_k$) reliés entre eux et traversés uniquement par des impulsions de mesure et signaux de rétrodiffusion, en ce que deux seconds duplexeurs ($DRAB_k$, $DRBA_{k+1}$) reliés aux première et seconde liaisons de deux paires successives ont des seconds accès ($ACB_k$) reliés entre eux et traversés uniquement par des impulsions de mesure et signaux de rétrodiffusion, et en ce que le second accès de l'un des deux seconds duplexeurs ($DEBA_1$, $DRBA_K$) non relié à un autre second duplexeur est relié à un réflectomètre optique (REF) qui est connecté à des moyens de calcul pour localiser un saut d'atténuation anormal (SAU) dans lesdites liaisons optiques conformément à l'une quelconque des revendications 1 à 7.

9. Système pour surveiller un réseau étoilé de plusieurs paires bidirectionnelles de liaisons optiques ($FE_1$, $FR_1$;$FE_2$, $FR_2$; $FE_3$, $FR_3$) respectivement associées à un terminal principal et des terminaux secondaires de transmission et réception de signaux utile de données ($T_1$ , $T_2$, T3), ledit terminal principal ($T_1$) transmettant un signal utile ($\lambda_T$)à partir d'une extrémité d'entrée d'une première liaison optique principale ($FE_1$) associée au terminal principal ($T_1$) vers des extrémités de sortie de secondes liaisons optiques secondaires ($FR_2$, $FR_3$) associées aux terminaux secondaires ($T_2$, $T_3$) à travers des premiers moyens de couplage (COE) qui ont des accès respectivement reliés à une extrémité de sortie de la première liaison optique principale ($FE_1$) et à des extrémités d'entrée des secondes liaisons optiques secondaires ($FR_2$,$FR_3$), et lesdits terminaux secondaires ($T_2$, $T_3$) transmettant des signaux utiles ($\lambda_T$) à partir d'extrémités d'entrée de premières liaisons optiques secondaires ($FE_2$, $FE_3$) associées aux terminaux secondaires ($T_2$, $T_3$) vers une extrémité de sortie d'une seconde liaison optique principale ($FR_1$) associée au terminal principal ($T_1$) à travers des seconds moyens de couplage (COR) qui ont des accès respectivement reliés à des extrémités de sortie des premières liaisons optiques secondaires ($FE_2$, $FR_3$) et à une extrémité d'entrée de la seconde liaison optique principale ($FR_1$), caractérisé en ce qu'il comprend des duplexeurs d'entrée de longueurs d'onde à trois accès ($DE_1$, $DE_2$, $DE_3$) ayant des accès communs reliés respectivement aux extrémités d'entrée des premières liaisons optiques ($FE_1$, $FE_2$, $FE_3$), des duplexeurs de sortie de longueurs d'onde à trois accès ($DR_1$, $DR_2$, $DR_3$) ayant des accès communs reliés respectivement aux extrémités de sortie des secondes liaisons optiques ($FR_1$, $FR_2$, $FR_3$), des premiers duplexeurs de longueurs d'onde à trois accès ($DCE_1$, $DCR_2$, $DCR_3$) ayant des premiers accès reliés respectivement aux accès des premiers moyens de couplage (COE) et des accès communs reliés respectivement à l'extrémité de sortie de la première liaison optique principale ($FE_1$) et aux extrémités d'entrée des secondes liaisons optiques secondaires ($FR_2$, $FR_3$) et des seconds duplexeurs de longueurs d'onde à trois accès ($DCR_1$, $DCE_2$, $DCE_3$) ayant des premiers accès reliés respectivement aux accès des seconds moyens de couplage (COR) et des accès communs reliés à l'extrémité d'entrée de la seconde liaison optique principale ($FR_1$) et aux extrémités de sortie des premières liaisons optiques secondaires ($FE_2$, $FE_3$), en ce que les duplexeurs d'entrée et de sortie ($DE_1$, $DR_1$ ; $DE_2$, $DR_2$ ; $DE_3$, $DR_3$) reliés aux première et seconde liaisons optiques associées à un même terminal ($T_2$, $T_3$) différent d'un terminal prédéterminé ($T_1$) ont des seconds accès reliés entre eux , en ce que l'un des duplexeurs d'entrée et de sortie ($DE_1$, $DR_1$) reliés aux première et seconde liaisons optiques associées au terminal prédéterminé ($T_1$) a un second accès relié à un réflectomètre optique (REF) connecté à des moyens de calcul pour localiser un saut d'atténuation anormal (SAU) dans lesdites liaisons optiques conformément à l'une quelconque des revendications 1 à 7, et en ce que des seconds accès des premier et second duplexeurs ($DCE_1$, $DCR_1$) reliés aux première et seconde liaisons optiques associés au terminal prédéterminé ($T_1$) sont reliés respectivement à des seconds accès de deux premiers duplexeurs ($DCR_2$, $DCR_3$), et les seconds accès des autres premiers et seconds duplexeurs ($DCE_2$, $DCE_3$)sont reliés deux à deux, lesdites seconds accès des duplexeurs étant traversés uniquement par des impulsions et signaux de rétrodiffusion ($\lambda_M$).

10. Système conforme à la revendication 9, caractérisé en ce que ledit terminal prédéterminé est le terminal principal ($T_1$).

**11.** Système pour surveiller des premières liaisons optiques (FAB$_1$ à FAB$_K$) disposées en parallèle et ayant chacune des première et seconde extrémités situées dans des première et seconde stations (SA, SB), caractérisé en ce qu'il comprend des premiers duplexeurs de longueurs d'onde à trois accès (DEAB$_1$ à DEAB$_K$) ayant des accès communs reliés respectivement aux premières extrémités des premières liaisons optiques (FAB$_1$ à FAB$_K$) et en ce que ladite première station (SA) comprend un premier réflectomètre optique (REFA), des premiers moyens de commutation optiques (CTA) reliant séquentiellement des seconds accès des premiers duplexeurs à un accès optique (fM) du premier réflectomètre (REFA), et des premiers moyens de calcul (CALA) reliés au premier réflectomètre et commandant les premiers moyens de commutation optiques, pour localiser des sauts d'atténuation anormaux (SAU) conformément à l'une quelconque des revendications 1 à 7, respectivement dans les premières liaisons optiques (FAB$_1$ à FAB$_K$).

**12.** Système conforme à la revendication 11, caractérisé en ce qu'il comprend des secondes liaisons optiques (FBA$_1$ à FBA$_K$) qui sont disposées en parallèle avec les premières liaisons optiques et de préférence convoyant des signaux utiles de données ($\lambda_T$) en sens inverse de signaux utiles de données ($\lambda_T$) convoyés dans les premières liaisons (FAB$_1$ à FAB$_K$), des seconds duplexeurs de longueurs d'onde à trois accès (DEBA$_1$ à DEB$_K$) ayant des accès communs reliés respectivement aux secondes extrémités des secondes liaisons optiques (FBA$_1$ à FBA$_K$), et en ce que la seconde station (SB) comprend un second réflectomètre (REFB), des seconds moyens de commutation optiques (CTB) reliant séquentiellement des seconds accès des seconds duplexeurs à un accès optique (fM) du second réflectomètre, et des seconds moyens de calcul (CALB) reliés au second réflectomètre et commandant les seconds moyens de commutation optiques, pour localiser des sauts d'atténuation anormaux (SAU) conformément à l'une quelconque des revendications 1 à 7 respectivement dans les secondes liaisons optiques (FBA$_1$ à FBA$_K$).

**13.** Système conforme à la revendication 12, caractérisé en ce que les premières extrémités des premières liaisons optiques (FAB$_1$ à FAB$_K$) et les secondes extrémités des secondes liaisons optiques (FBA$_1$ à FBA$_K$) sont des extrémités d'entrée de signaux utiles de données.

## Claims

**1.** System for monitoring at least one optical fibre (F), said fibre having an input end which receives a useful data signal at a transmission wavelength ($\lambda_T$) emitted by electro-optical emission means (E) and an output end transmitting said data signal to electro-optical receiving means (R), characterised in that it comprises an optical reflectometer (REF) for periodically transmitting measuring impulses at a measuring wavelength ($\lambda_M$) different from the transmission wavelength ($\lambda_T$) into the optical fibre (F), a wavelength duplexer (DU) having a first port (AC1) connected to one of the electro-optical emission and receiving means (E, R), a second port (AC2) connected to the reflectometer (REF) and a common port (AC3) connected to the end of the optical fibre (F) associated with the electro-optical means connected to the first port (AC1), and calculating means (CAL) connected to the reflectometer (REF) for locating an abnormal attenuation (Att) jump (SAU) in the fibre above a predetermined threshold (RES) by treating retrodiffusion signals detected by the reflectometer and transmitted by the optical fibre (F) from the common port (AC3) to the second port (AC2) of the duplexer in response to the measuring impulses, said predetermined threshold (RES) being below the vertical resolution of the reflectometer (REF).

**2.** System according to claim 1, characterised in that the measuring wavelength ($\lambda_M$) corresponds substantially to a minimal line attenuation of the optical link (F).

**3.** System according to claim 1 or 2, characterised in that the calculating means (CAL) comprise means for calculating sequentially,
- the difference (DA) between two successive retrodiffusion functions (AR, AM) provided by the reflectometer (REF),
- the integral (IN) of the difference for the length (L) of the optical fibre (F) and
- the abscissa (d) of a point of said integral where a slope break (PR) corresponds to an attenuation jump (SAU) which may be above the predetermined threshold (RES).

12

4. System according to claim 3, characterised in that the slope break is traced by means which make it possible, starting from the integral (IN):

- to change the ordinate corresponding to the pivoting of a straight line $(x.tg\alpha + B)$ passing through the points, having as abscissae (O, L), the ends of said fibre (F) with an angle corresponding to the slope $(tg\alpha)$ of said straight line, in order to obtain a pivoted integral (PIN),
- to successively split the pivoted integral (PIN) over the length (L) of the fibre in order to calculate and compare the standard deviations of the pivoted integral in the two intervals of a previous split interval and again split one of the two intervals having the greatest standard deviation, the abscissa (d) of the point (PR) corresponding to an attenuation jump (SAU) being determined when an interval comprises not more than two to three points of said pivoted integral and
- to calculate the slopes $(A\text{-}tg\alpha, C\text{-}tg\alpha)$ of the two straight lines $(\Delta_A, \Delta_C)$ passing through said slope break point (PR) and the points having as abscissae (O, L) the ends of the fibre (F) by the method of least squares applied to the pivoted integral (PIN), in order to deduce, from the difference between the slopes of the two straight lines, the attenuation (Att = C-A) at the break point (PR).

5. System according to claim 3 or 4, characterised in that each retrodiffusion function (AR, AM) is equal to the mean of elementary retrodiffusion functions in response to measuring impulses, emitted successively during a calculation sequence $(T_n)$.

6. System according to claim 5, characterised in that the said difference (AD) is equal to the difference in the mean $(AR_n)$ of means $(AR_{n-3}, AR_{n-2}, AR_{n-1})$ of elementary retrodiffusion functions during several calculating sequences of a predetermined number preceding a calculating sequence $(T_n)$ during which the difference is calculated, and the mean $(AR_n)$ of elementary diffusion functions acquired during said calculating sequence $(T_n)$.

7. System according to any one of claims 1 to 6, characterised in that it comprises alarm means (AL) for signalling an abnormal attenuation jump above said predetermined threshold (RES).

8. System for monitoring a plurality of pairs of first and second fibre optic links ($FAB_1$ to $FAB_K$, $FBA_1$ to $FBA_K$) arranged in parallel and having first and second ends located in first and second stations (SA, SB), characterised in that it comprises first and second wavelength duplexers with three ports ($DRBA_1$ to $DEAB_K$, $DEBA_1$ to $DRAB_K$) located, respectively, in the first and second stations (SA, SB), and having common ports connected respectively to first and second ends of the optical links, in that two first duplexers ($DRB_k$, $DEAB_k$) connected to the links ($FBA_k$, $FAB_k$) of a first pair have second ports ($ACA_k$) connected to one another and traversed solely by measuring impulses and retrodiffusion signals, in that two second duplexers ($DRAB_k$, $DRBA_{k+1}$) connected to the first and second links of two successive pairs have second ports ($ACB_k$) connected to one another and traversed solely by measuring impulses and retrodiffusion signals, and in that the second port of one of the two second duplexers ($DEBA_1$, $DRBA_k$) not connected to another second duplexer is connected to an optical reflectometer (REF) which is connected to calculating means in order to locate an abnormal attenuation jump (SAU) in said optical links, in accordance with any one of claims 1 to 7.

9. System for monitoring a star network of several bidirectional pairs of optical links ($FE_1$, $FR_1$; $FE_2$, $FR_2$; $FE_3$, $FR_3$) respectively associated with a main terminal and secondary terminals for transmitting and receiving useful data signals ($T_1$, $T_2$, $T_3$), said main terminal ($T_1$) transmitting a useful signal ($\lambda_T$) from one input end of a first main optical link ($FE_1$) associated with the main terminal ($T_1$) towards output ends of second secondary optical links ($FR_2$, $FR_3$) associated with the secondary terminals ($T_2$, $T_3$), through first coupling means (COE) which have ports respectively connected to an output end of the first main optical link ($FE_1$) and to input ends of the second secondary optical links ($FR_2$, $FR_3$), and said secondary terminals ($T_2$, $T_3$) transmitting useful signals ($\lambda_T$) from input ends of first secondary optical links ($FE_2$, $FE_3$) associated with the secondary terminals ($T_2$, $T_3$) towards an output end of a second main optical link ($FR_1$) associated with the main terminal ($T_1$) through second coupling means (COR) which have ports connected, respectively, to the output ends of the first secondary optical links ($FE_2$, $FR_3$) and to an input end of the second main optical link ($FR_1$), characterised in that it comprises input wavelength duplexers with three ports ($DE_1$, $DE_2$, $DE_3$) having common ports connected respectively to the input ends of the first optical links ($FE_1$, $FE_2$, $FE_3$), output wavelength duplexers with three ports ($DR_1$, $DR_2$, $DR_3$), having common ports connected respectively to the output ends of the second optical

links (FR$_1$, FR$_2$, FR$_3$), first wavelength duplexers with three ports (DCE$_1$, DCR$_2$, DCR$_3$), having first ports connected respectively to ports of the first coupling means (COE) and common ports connected respectively to the output end of the first main optical link (FE$_1$) and to the input ends of the second secondary optical links (FR$_2$, FR$_3$) and second wavelength duplexers with three ports (DCR$_1$, DCE$_2$, DCE$_3$) having first ports connected respectively to the ports of the second coupling means (COR) and common ports connected to the input end of the second main optical link (FR$_1$) and to the output ends of the first secondary optical links (FE$_2$, FE$_3$), in that the input and output duplexers (DE$_1$, DR$_1$; DE$_2$, DR$_2$; DE$_3$, DR$_3$) connected to the first and second optical links associated with a single terminal (T$_2$, T$_3$) different from a predetermined terminal (T$_1$) have second ports connected to one another, in that one of the input and output duplexers (DE$_1$, DR$_1$) connected to the first and second optical links associated with the predetermined terminal (T$_1$) has a second port connected to an optical reflectometer (REF) connected to calculating means for locating an abnormal attenuation jump (SAU) in said optical links, in accordance with any of claims 1 to 7, and in that second ports of the first and second duplexers (DCE$_1$, DCR$_1$) connected to the first and second optical links associated with the predetermined terminal (T$_1$) are connected respectively to second ports of two first duplexers (DCR$_2$, DCR$_3$), and the second ports of the other first and second duplexers (DCE$_2$, DCE$_3$) are connected in pairs, said second ports of the duplexers having only impulses and retrodiffusion signals ($\lambda_M$) passing through them.

10. System according to claim 9, characterised in that said predetermined terminal is the main terminal (T$_1$).

11. System for monitoring first optical links (FAB$_1$ to FAB$_K$) arranged in parallel and each having first and seconds ends located in first and second stations (SA, SB), characterised in that it comprises first wavelength duplexers with three ports (DEAB$_1$ to DEAB$_K$) having common ports connected respectively to the first ends of the first optical links (FAB$_1$ to FAB$_K$) and in that said first station (SA) comprises a first optical reflectometer (REFA), first optical switching means (CTA) sequentially linking the second ports of the first duplexers to an optical port (fM) of the first reflectometer (REFA) and first calculating means (CALA) connected to the first reflectometer and controlling the first optical switching means in order to locate abnormal attenuation jumps (SAU), in accordance with any of claims 1 to 7, in the first optical links (FAB$_1$ to FAB$_K$), respectively.

12. System according to claim 11, characterised in that it comprises second optical links (FBA$_1$ to FBA$_K$) which are arranged in parallel with the first optical links and preferably convey useful data signals ($\lambda_T$) in the opposite direction to useful data signals ($\lambda_T$) conveyed in the first links (FAB$_1$ to FAB$_K$), second wavelength duplexers with three ports (DEBA$_1$ to DEBA$_K$) having common ports respectively connected to the second ends of the second optical links (FBA$_1$ to FBA$_K$) and in that the second station (SB) comprises a second reflectometer (REFB), second optical switching means (CTB) which sequentially connect the second ports of the second duplexers to an optical port (fM) of the second reflectometer, and second calculating means (CALB) connected to the second reflectometer and controlling the second optical switching means, in order to locate abnormal attenuation jumps (SAU), in accordance with any one of claims 1 to 7, in the second optical links (FBA$_1$ to FBA$_K$, respectively.

13. System according to claim 12, characterised in that the first ends of the first optical links (FAB$_1$ to FAB$_K$) and the second ends of the second optical links (FBA$_1$ to FBA$_K$) are input ends of useful data signals.

**Patentansprüche**

1. Überwachungssystem für mindestens eine Glasfaser (F), wobei diese Faser ein Eingangsende, das ein Datennutzsignal mit einer Transmissionswellenlänge ($\lambda_T$) empfängt, das von einer elektrooptischen Emissionseinrichtung (E) abgegeben wird, und ein Ausgangsende, das dieses Datensignal zu einer elektrooptischen Empfangseinrichtung (R) überträgt, aufweist, dadurch gekennzeichnet, daß es ein optisches Reflektometer (REF) zur periodischen Übertragung von Meßimpulsen mit einer Meßwellenlänge ($\lambda_M$), die von der Transmissionswellenlänge ($\lambda_T$) in der Glasfaser (F) verschieden ist, einen Wellenlängenduplexer (DU) mit einem ersten Anschluß (AC1), der mit einer der elektrooptischen Emissions- oder Empfangseinrichtungen (E, R) verbunden ist, mit einem zweiten Anschluß (AC2), der mit dem Reflektometer (REF) verbunden ist, und mit einem gemeinsamen Anschluß (AC3), der mit dem

14

Ende der Glasfaser (F), die mit der mit dem ersten Anschluß (AC1) verbundenen elektrooptischen Einrichtung verbunden ist, und mit dem Reflektometer (REF) verbundene Recheneinrichtungen (CAL) zur Lokalisierung eines anormalen Sprungs (SAU) der Dämpfung (Att) in der Faser, der größer als eine vorgegebene Schwelle (RES) ist, durch Verarbeitung der Rückstreuungssignale, die vom Reflektometer entdeckt und von der Glasfaser (F) vom gemeinsamen Anschluß (AC3) zum zweiten Anschluß (AC2) des Duplexers als Antwort auf die Meßimpulse übertragen werden, aufweist, wobei die vorgegebene Schwelle (RES) unterhalb der vertikalen Auflösung des Reflektometers (REF) liegt.

2. System nach Anspruch 1, dadurch gekennzeichnet, daß die Meßwellenlänge ($\lambda_M$) genau einer minimalen längenbezogenen Dämpfung der optischen Strecke (F) entspricht.

3. System nach Anspruch 1 oder 2, dadurch gekennzeichnet, daß die Recheneinrichtungen (CAL) Einrichtungen zum sequentiellen Berechnen
- der Differenz (AD) zwischen zwei aufeinanderfolgenden Rückstreuungsfunktionen (AR, AM), die vom Reflektometer (REF) geliefert werden,
- dem Integral (IN) der Differenz über die Länge (L) der Glasfaser (F) und
- der Abszisse (d) eines Punktes dieses Integrals, an dem eine Unstetigkeit in der Steigung (PR) einem Dämpfungssprung (SAU) entspricht, der größer als die vorgegebene Schwelle (RES) sein kann,
aufweist.

4. System nach Anspruch 3, dadurch gekennzeichnet, daß die Unstetigkeit der Steigung durch Einrichtungen festgestellt wird, die anhand des Integrals (IN) folgendes ermöglichen:
- eine Änderung der Ordinate, die einer Drehung einer Geraden (x.tg$\alpha$ + B), die durch die Punkte mit der Abszisse (O, L), den Endpunkten der Glasfaser (F), verläuft, um einen Winkel entsprechend der Steigung (tg$\alpha$) dieser Geraden entspricht, um ein gedrehtes Integral (PIN) zu erhalten,
- sukzessives Aufspalten des gedrehten Integrals (PIN) über die Länge (L) der Faser auf zwei Intervalle, um die Standardabweichungen des gedrehten Intervalls in den beiden Intervallen von einem vorangegangenen dichotomischen Intervall zu berechnen und zu vergleichen und von neuem eine Aufteilung eines der beiden Intervalle mit der größten Standardabweichung auf zwei Intervalle zu bewirken, wobei die Abszisse (d) des Punktes (PR), der einem Dämpfungssprung (SAU) entspricht, dadurch festgestellt wird, daß ein Intervall nicht mehr als zwei bis drei Punkte des gedrehten Intervalls aufweist, und
- eine Berechnung der Steigungen (A-tg$\alpha$, C-tg$\alpha$) der beiden Geraden ($\Delta_A$, $\Delta_C$), die durch den Punkt der Steigungsunstetigkeit (PR) und die Punkte, die als Abszisse (O, L) die Endpunkte der Faser (F) aufweisen, verlaufen nach der Methode der kleinsten Fehlerquadrate, die auf das gedrehte Intervall (PIN) angewandt wird, um von der Differenz der Steigungen der beiden Geraden die Dämpfung (Att = C-A) am Unstetigkeitspunkt (PR) abzuleiten.

5. System nach Anspruch 3 oder 4, dadurch gekennzeichnet, daß jede Rückstreuungsfunktion (AR, AM) dem Mittelwert der Rückstreuungsgrundfunktionen als Antwort auf die Meßimpulse, die sukzessive während einer Berechnungssequenz ($T_n$) ausgesandt werden, entspricht.

6. System nach Anspruch 5, dadurch gekennzeichnet, daß die Differenz (AD) gleich der Differenz aus dem Mittelwert ($AR_n$) aus den Mittelwerten ($AR_{n-3}$, $AR_{n-2}$, $AR_{n-1}$) der Rückstreuungsgrundfunktionen während mehrerer Rechensequenzen vorgegebener Anzahl, die einer Rechensequenz ($T_n$), in dessen Verlauf die Differenz berechnet wird, vorangehen, und dem Mittelwert ($AR_n$) der Rückstreuungsgrundfunktionen, die sich während der Rechensequenz ($T_n$) ergeben, ist.

7. System nach einem der Ansprüche 1 bis 6, dadurch gekennzeichnet, daß es Alarmeinrichtungen (AL) zur Anzeige eines anormalen Dämpfungssprungs über die vorgegebene Schwelle (RES) aufweist.

8. Überwachungssystem für mehrere Paare von ersten und zweiten Glasfaserstrecken ($FAB_1$ bis $FAB_K$, $FBA_1$ bis $FBA_K$), die parallel angeordnet sind und erste und zweite Enden in ersten und zweiten Stationen (SA, SB) aufweisen, dadurch gekennzeichnet, daß es erste und zweite Wellenlängenduplexer mit drei Anschlüssen ($DRBA_1$ bis $DEAB_K$, $DEBA_1$ bis $DRAB_K$) aufweist, die jeweils in den ersten und zweiten Stationen (SA, SB) angeordnet sind und gemeinsame Anschlüsse, die jeweils mit den ersten und zweiten Enden der optischen Verbindungen verbunden sind, aufweisen, daß zwei erste Duplexer

(DRBA$_k$, DEAB$_k$), die mit den Fasern (FBA$_k$, FAB$_k$) eines solchen Paares verbunden sind, zweite Anschlüsse (ACA$_k$), die untereinander verbunden sind und die nur von den Meßimpulsen und den Rückstreuungssignalen durchflossen werden, aufweisen, daß zwei zweite Duplexer (DRAB$_k$, DRBA$_{k+1}$), die mit den ersten und zweiten Fasern von zwei aufeinanderfolgenden Paaren verbunden sind, zweite Anschlüsse (ACB$_k$), die untereinander verbunden sind und nur von den Meßimpulsen und den Rückstreuungssignalen durchlaufen werden, aufweisen, und daß der zweite Anschluß einer der beiden zweiten Duplexer (DEBA$_1$, DRBA$_K$), der nicht mit einem zweiten Duplexer verbunden ist, mit einem optischen Reflektometer (REF), das mit den Recheneinrichtungen verbunden ist, verknüpft ist, um einen anormalen Phasensprung (SAU) in den optischen Verbindungen nach einem der Ansprüche 1 bis 7 zu lokalisieren.

9. Überwachungssystem für ein sternförmiges Netz mehrerer Paare bidirektionaler Glasfaserstrecken (FE$_1$, FR$_1$; FE$_2$, FR$_2$; FE$_3$, FR$_3$), die jeweils mit einer Hauptendeinrichtung und Nebenendeinrichtungen zur Übertragung und zum Empfang von Datennutzsignalen (T$_1$, T$_2$, T$_3$) verbunden sind, wobei die Hauptendeinrichtung (T$_1$) ein Nutzsignal ($\lambda_T$) zu einem Eingangsende einer ersten Glasfaserhauptstrecke (FE$_1$) überträgt, die mit der Hauptendeinrichtung (T$_1$) über Ausgangsenden von Nebenglasfaserstrecken (FR$_2$, FR$_3$) verbunden ist, die mit den Nebenendeinrichtungen (T$_2$, T$_3$) über erste Koppeleinrichtungen (COE) verbunden sind, die Anschlüsse aufweisen, die jeweils mit einem Ausgangsende der ersten Hauptglasfaserstrecke (FE$_1$) und mit Eingangsenden der Nebenglasfaserstrecken (FR$_2$, FR$_3$) verbunden sind, und die Nebenendeinrichtungen (T$_2$, T$_3$) Nutzsignale ($\lambda_T$) vom Eingangsende der ersten Nebenglasfaserstrecken (FE$_2$, FE$_3$) übertragen, die mit den Nebenendeinrichtungen (T$_2$, T$_3$) über ein Ausgangsende einer zweiten Hauptglasfaserstrecke (FR$_1$) verbunden sind, die mit der Hauptendeinrichtung (T$_1$) über zweite Koppeleinrichtungen (COR) verbunden sind, die Anschlüsse aufweisen, die jeweils mit Ausgangsenden der ersten Nebenglasfaserstrecken (FE$_2$, FR$_3$) und mit einem Eingangsende der zweiten Hauptglasfaserstrecke (FR$_1$) verbunden sind, dadurch gekennzeichnet,

- daß es Eingangsduplexer der Wellenlänge mit drei Anschlüssen (DE$_1$, DE$_2$, DE$_3$), die gemeinsame, jeweils mit den Eingangsenden der Hauptglasfaserstrecken (FE$_1$, FE$_2$, FE$_3$) verbundene Anschlüsse aufweisen, und Ausgangsduplexer der Wellenlänge mit drei Anschlüssen (DR$_1$, DR$_2$, DR$_3$) mit jeweils mit den Ausgangsenden der Nebenglasfaserstrecken (FR$_1$, FR$_2$, FR$_3$) verbundenen Anschlüssen aufweist, wobei die ersten Wellenlängenduplexer mit drei Anschlüssen (DCE$_1$, DCR$_2$, DCR$_3$) erste jeweils mit den Anschlüssen der ersten Koppeleinrichtung (COE) verbundene Anschlüsse und gemeinsame, jeweils mit dem Ausgangsende der ersten Hauptglasfaserstrecke (FE$_1$) und mit den Eingangsenden der zweiten Nebenglasfaserstrecken (FR$_2$, FR$_3$) verbundene Anschlüsse aufweisen und die zweiten Wellenlängenduplexer mit drei Anschlüssen (DCR$_1$, DCE$_2$, DCE$_3$), erste jeweils mit den Anschlüssen der zweiten Koppeleinrichtungen (COR) und gemeinsame Anschlüsse, die mit dem Eingangsende der zweiten Hauptglasfaserstrecke (FR$_1$) und den Ausgangsenden der ersten Nebenglasfaserstrecken (FE$_2$, FE$_3$) verbunden sind, aufweisen,
- daß die Eingangs- und Ausgangsduplexer (DE$_1$, DR$_1$; DE$_2$, DR$_2$; DE$_3$, DR$_3$), die mit den ersten und zweiten Glasfaserstrecken, die mit der gleichen, von einer vorgegebenen Endeinrichtung (T$_1$) verschiedenen Endeinrichtung (T$_2$, T$_3$) verknüpft sind, verbunden sind, zweite miteinander verbundene Anschlüsse aufweisen,
- daß einer der Eingangs- und Ausgangsduplexer (DE$_1$, DR$_1$), die mit der ersten und zweiten Glasfaserstrecke, die mit der vorgegebenen Endeinrichtung (T$_1$) verknüpft sind, verbunden sind, einen zweiten Anschluß aufweist, der mit einem optischen Reflektometer (REF) verbunden ist, der mit den Recheneinrichtungen verknüpft ist, um einen anormalen Dämpfungssprung (SAU) in diesen Glasfaserstrecken nach einem der Ansprüche 1 bis 7 zu lokalisieren,
- und daß zweite Anschlüsse der ersten und zweiten Duplexer (DCE$_1$, DCR$_1$), die mit der ersten und zweiten mit der vorgegebenen Endeinrichtung (T$_1$) verbundenen Glasfaserstrecken verbunden sind, mit den zweiten Anschlüssen der beiden ersten Duplexer (DCR$_2$, DCR$_3$) verbunden sind, und die zweiten Anschlüsse der anderen ersten und zweiten Duplexer (DCE$_2$, DCE$_3$) paarweise verbunden sind, wobei diese zweiten Anschlüsse der Duplexer nur von den Impulsen und Rückstreuungssignalen ($\lambda_M$) durchflossen werden.

10. System nach Anspruch 9, dadurch gekennzeichnet, daß die vorgegebene Endeinrichtung die Hauptendeinrichtung (T$_1$) ist.

**11.** Überwachungssystem für erste Glasfaserstrecken (FAB$_1$ bis FAB$_K$), die parallel angeordnet sind und jeweils erste und zweite Enden, die in ersten und zweiten Stationen (SA, SB) angeordnet sind, aufweisen, dadurch gekennzeichnet, daß es erste Wellenlängenduplexer mit drei Anschlüssen (DEAB$_1$ bis DEAB$_K$) mit jeweils mit den ersten Enden der ersten Glasfaserstrecken (FAB$_1$ bis FAB$_K$) verbundenen gemeinsamen Anschlüssen aufweist, und daß die erste Station (SA) ein erstes optisches Reflektometer (REFA), erste optische Umschalteinrichtungen (CTA), die nacheinander zweite Anschlüsse der ersten Duplexer mit einem optischen Eingang (fM) des ersten Reflektometers (REFA) verbinden, und erste Recheneinrichtungen (CALA), die mit dem ersten Reflektometer verbunden sind und die ersten optischen Schalteinrichtungen steuern, um anormale Phasensprünge (SAU) nach einem der Ansprüche 1 bis 7 in den ersten Glasfaserstrecken (FAB$_1$ bis FAB$_K$) zu lokalisieren, aufweist.

**12.** System nach Anspruch 11, dadurch gekennzeichnet, daß es zweite Glasfaserstrecken (FBA$_1$ bis FBA$_K$) aufweist, die parallel zu den ersten Glasfaserstrecken angeordnet sind und vorzugsweise Datennutzsignale ($\lambda_T$) mit inversem Vorzeichen zu den in den ersten Strecken (FAB$_1$ bis FAB$_K$) übertragenen Datennutzsignalen ($\lambda_T$) führt, wobei die zweiten Wellenlängenduplexer mit drei Anschlüssen (DEBA$_1$ bis DEBA$_K$) gemeinsame, jeweils mit den zweiten Enden der zweiten Glasfaserstrecken (FBA$_1$ bis FBA$_K$) verbundene Anschlüsse aufweisen, und daß die zweite Station (SB) ein zweites Reflektometer (REFB), zweite optische Schalteinrichtungen (CTB), die nacheinander die zweiten Anschlüsse der zweiten Duplexer mit einem optischen Eingang (fM) des zweiten Reflektometers verbinden, und zweite Recheneinrichtungen (CALB), die mit dem zweiten Reflektometer verbunden sind und die zweiten optischen Schalteinrichtungen steuern, um anormale Phasensprünge (SAU) nach einem der Ansprüche 1 bis 7 jeweils in den zweiten Glasfaserstrecken (FBA$_1$ bis FBA$_K$) zu lokalisieren, aufweist.

**13.** System nach Anspruch 12, dadurch gekennzeichnet, daß die ersten Enden der ersten Glasfaserstrecken (FAB$_1$ bis FAB$_K$) und die zweiten Enden der zweiten Glasfaserstrecken (FBA$_1$ bis FBA$_K$) die Eingangsenden für die Datennutzsignale sind.

FIG.1

EP 0 365 371 B1

# FIG.2

INITIALISATION $\lambda_M$, L

PERIODE $T_n$

Moyenne de($\simeq$1000) rétrodiffusions élémentaires

Acquisition

$(AM_{n-3} + AM_{n-2} + AM_{n-1})/3 = AR_n$

$AR = AR_n$

$AM = AM_n$

$DA = AR - AM$

$IN(x) = \int_0^L DA(\dot{x}).dx$

$PIN(x) = IN(x) - xtg\alpha$
$tg\alpha = (IN(L) - IN(O))/L$

dichotomies et régressions lineaires dans [O,L]

Ecarts-types dans deux intervalles dichotomiques

plus grand écart-type ⟶ nouvel intervalle

nb. points dans nouvel intervalle $\leqslant 3$

NON

Affichage d

$A - tg\alpha$ et $C - tg\alpha$ par régression lineaire (méthode des moindres carrés)

Affichage Att = C $-$ A

NON

Att $\geqslant$ RES $\simeq$ 0,002dB

ALARME

Recherche de saut d'atténuation SAU

19

# FIG.3A

(dB)

A

AR(x)

C

SAU

AM(x)

0   d   L   x(m)

# FIG.3B

$$DA(x) = AR(x) - AM(x)$$
(dB)

C

A

0   d   L   x(m)

# FIG.3C

$$IN(x) = \int_0^x DA(x).dx$$
(dBm)

IN(L)

$x\,tg\alpha + B$

$tg\alpha$

$Cx + D$

$Ax + B$

Att

C

PR

A

IN(0) = B   0   d   L   x(m)

$$d = \frac{D - B}{A - C}$$

$$Att = C - A$$

# FIG.3D

$$PIN(x) = IN(x) - x.tg\alpha$$
(dBm)

B =
PIN(0) = PIN(L)

$A - tg\alpha$   $C - tg\alpha$

PIN(d)

Att

0   d   L   x(m)

L/8   L/16

L/2   L/4   dichotomies successives;
écarts types les plus grands

20

FIG.4

FIB RE   MONOMODE 10 / 125

L = 2400 m
Att = 0,001 dB
d = 890 m

FIG.5

FIB RE   MULTIMODE 50 / 125

L = 1340 m
Att = 0,003 dB
d = 490 m

FIG.6

EP 0 365 371 B1

FIG.7

FIG.8